# EUROPÄISCHE PATENTSCHRIFT

(11) **EP 1 638 161 B1**
(45) Veröffentlichungstag und Bekanntmachung des Hinweises auf die Patenterteilung: **19.01.2011**
(21) Anmeldenummer: 04021984.2
(22) Anmeldetag: 16.09.2004
(51) Int. Cl.: H01M 10/10, H01M 2/36

(54) **Verfahren und Vorrichtung zur Herstellung einer wartungsfreien Batterie mit festgelegtem Elektrolyten**
Method and device for manufacturing a maintenance-free lead battery with an immobilized electrolyte
Procédé et dispositif pour l'élaboration d'une batterie sans entretien contenant un électrolyte immobilisé

(43) Veröffentlichungstag der Anmeldung: 22.03.2006
(60) Teilanmeldung: 10007985.4
(73) Patentinhaber: HOPPECKE Batterien GmbH & Co. KG, 59929 Brilon (DE)
(72) Erfinder: Ruch, Jean, Dr., 59929 Brilon (DE); Schröder, Dirk, 59872 Meschede (DE); Schulte, Albert, 59929 Brilon-Hoppecke (DE)
(74) Vertreter: Stenger, Watzke & Ring

(56) Entgegenhaltungen:
- EP-A- 0 491 150
- EP-A- 1 317 006
- GB-A- 1 364 438
- US-A- 3 402 077
- US-A- 4 359 075
- US-A- 4 414 302
- US-A- 4 687 718
- US-A- 5 338 596
- PATENT ABSTRACTS OF JAPAN Bd. 2000, Nr. 07, 29. September 2000 (2000-09-29) & JP 2000 123859 A (FURUKAWA BATTERY CO LTD:THE), 28. April 2000 (2000-04-28)

## Beschreibung

Die vorliegende Erfindung betrifft ein Verfahren sowie eine Vorrichtung zur Herstellung eines Akkumulators mit einem festgelegten Elektrolyten.

Akkumulatoren mit festgelegten Elektrolyten sind seit den 1950-Jahren bekannt. Der Vorteil solcher Batterietypen liegt in ihrer Wartungsfreundlichkeit und Sicherheit gegenüber dem Auslaufen des in den Akkumulatorzellen befindlichen Elektrolyten. Zur Festlegung des Elektrolyten ist es bekannt, diesen in Form eines Gels zu binden oder mit Hilfe eines mikrostrukturierten Vlieses in den Akkumulatorzellen zu fixieren.

Ein aus dem Stand der Technik bekannter Vertreter der gelfixierten Akkumulatoren sind Blei-Gel-Akkumulatoren, in welchen der Elektrolyt, in der Regel Schwefelsäure, in Form eines auf Basis von Siliciumdioxid gebildeten Gels festgelegt wird. Aus dem Stand der Technik, wie mit dem US-Patent US 4,317,872 offenbart, ist es bisher bekannt, das Elektrolytgel satzweise auf der Basis einer Dispersion aus einer Säure und einem Gelbildner herzustellen und in die Akkumulatorzellen einzubringen. Die satzweise Herstellung des Elektrolytgels führt jedoch oftmals zu Qualitätsschwankungen des Gels und somit letztendlich auch zu Qualitätsschwankungen in den produzierten Akkumulatoren.

Darüber hinaus muß das Gemisch Säure/Dispersion zur Verzögerung der Reaktion gekühlt werden. Die Platten müssen formiert sein. Aus dem deutschen Patent DE 197 57 481 ist bekannt eine Dispersion aus Wasser, Gelbildner und vorzugsweise Borsäure zur Reaktionsverzögerung vorzumischen und diese Dispersion einzufüllen. Im Akkumulator befindet sich die Schwefelsäure in der aktiven Masse der entladenen Platten. Die Gelbildung erfolgt durch Ladung.

Mit der offengelegten US-amerikanischen Patentanmeldung US 2003/0157400 A1 sowie der entsprechenden EP 1 317 006 A2 wird eine Vorrichtung zur Befüllung von Bleiakkumulatoren offenbart, in welcher die Gelkomponenten kontinuierlich während der Befüllung der Batterie gemischt werden. Hierdurch werden die Qualitätsschwankungen der satzweisen Elektrolytgelproduktion überwunden. Es sind zwei Behältnisse vorgesehen, wobei in einem der Behältnisse eine vorgegebene Menge an Säure und in dem zweiten der Behältnisse eine vorgegebene Menge am Gelbildner angeordnet sind. Die Volumen der beiden Behältnisse entsprechen dem Volumen des Elektrolyten in der Akkumulatorzelle. Beide Behältnisse sind über Leitungen mit einer Mischeinrichtung verbunden, wobei die Mischeinrichtung die Säure mit dem Gelbildner mischt. Eine weitere Leitung ist am Mixer angeordnet, um das Mischergebnis in die Akkumulatorzelle einzuführen.

Ein weiteres Problem bei der Herstellung von Akkumulatoren mit festgelegten Elektrolyten ist die Riss- und Porenbildung während des Formierungsprozesses der aktiven Massen in den Akkumulatorzellen, d.h. während des ersten Ladens der Akkumulatoren. Die an den Elektroden ablaufenden Reaktionen (im Fall des Bleiakkumulators an der negativen Elektrode die Umwandlung von Pb in PbSO₄, an der positiven Elektrode die Umwandlung von PbO₂ in PbSO₄ bzw. die entsprechenden Rückreaktionen) können zu Rissen und Poren in den gelierten Elektrolyten führen. Hierdurch wird zwar ein verbesserter Gastransport (Sauerstofftransport) innerhalb der Akkumulatorzellen ermöglicht, jedoch führen die Risse in unmittelbarer Umgebung der aktiven Massen zu erhöhten Zellwiderständen aufgrund schlechterer Kontaktierung zwischen aktiver Masse und Gel und damit zu einer Beeinträchtigung der Akkumulatorleistung

Aus der EP 0 491 150 B1 ist ein Verfahren zum Herstellen eines Bleiakkumulators bekannt, der einen Elektrolyten mit einem thixotropischen Gel aufweist. Das Gel besteht im Wesentlichen aus Schwefelsäure und einem Gelbildner. Das thixotropische Gel wird in eine Zelle des Akkumulators eingefüllt, und nach Beenden des Befüllungsschritts wird ein elektrischer Strom an die Elektroden der Akkumulatorzelle angelegt.

Die US 4,359,075 offenbart eine Arbeitsstation zum Befüllen von Zellen eines Akkumulators mit Säure.

Es ist die Aufgabe der Erfindung, ein gattungsgemäßes Verfahren dahingehend weiterzubilden, dass bei der Formierung eine ungleiche Wärmeentwicklung reduziert werden kann.

Als Lösung wird mit der Erfindung ein Verfahren zur Herstellung eines Akkumulators mit einem festgelegten Elektrolyten vorgeschlagen, wobei der Elektrolyt in einer Akkumulatorzelle des Akkumulators in Form eines Gels festgelegt wird, wobei der Elektrolyt in vliesfähiger Form, nämlich als Sol, in die Akkumulatorzelle eingebracht wird, wobei ein Gelbildner und eine Säure das Sol bildend erst im Moment der Einbringung in die Akkumulatorzelle gemischt werden, und die Festlegung des Elektrolyten und die Formation der aktiven Masse zeitgleich in der Akkumulatorzelle erfolgen, wobei mit Einbringung des Sols in die Akkumulatorzelle zeitgleich eine Spannung an die Akkumulatorzelle angelegt wird, die die aktive Masse in der Akkumulatorzelle formiert.

Die Vorteile des erfindungsgemäßen Verfahrens ergeben sich daraus, dass einerseits umformierte Platten eingesetzt werden können, andererseits das Sol/Säure-Gemisch kurz vor dem Einfüllen erstellt und innerhalb der Reaktionszeit eingefüllt wird. Daraus ergeben sich erhebliche Verfahrensvereinfachungen und Einsparungen wie Verzicht auf Kühlung, Bewegung, Vorformierung. Das Verfahren kann bei Raumtemperatur durchgeführt werden.

Durch die erfindungsgemäße Vorgehensweise wird bei der Formierung die Beweglichkeit der Schwefelsäure verringert, woraus eine Vergleichmäßigung der Wärmeentwicklung folgt, so dass Temperaturspritzen sich nicht, wie im Stand der Technik bekannt, negativ auf andere Bestandteile auswirken können.

Weitere Vorteile und Merkmale der Erfindung ergeben sich aus der nachfolgenden Figurenbeschreibung und dem Ausführungsbeispiel:

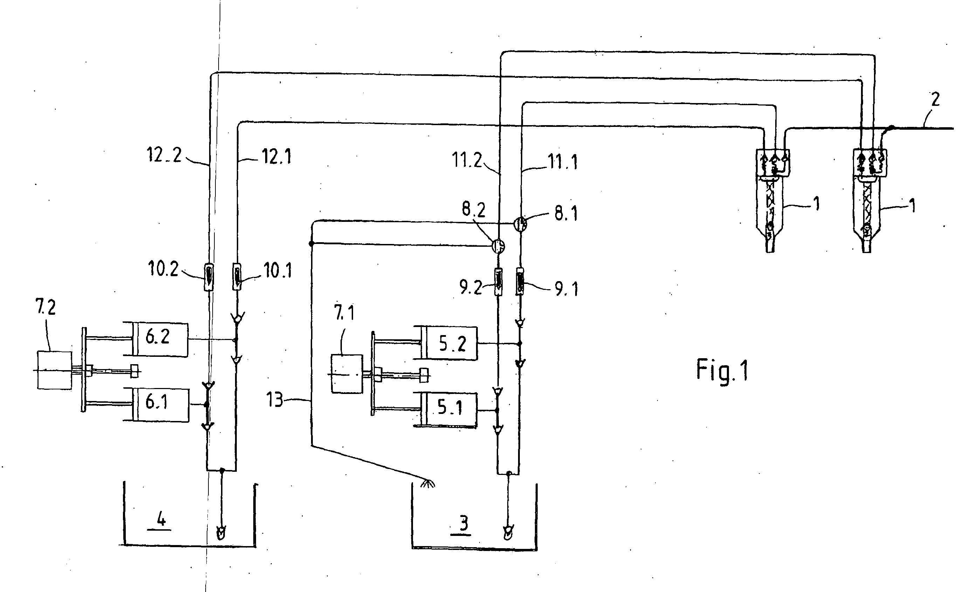

- Fig. 1: zeigt einen schematischen Aufbau der erfindungsgemäßen Vorrichtung,
- Fig. 2: zeigt den Aufbau des erfindungsgemäßen Füllkopfes (1) und
- Fig. 3: zeigt eine erfindungsgemäße Vorrichtung zur Befüllung einer Mehrzahl von Akkumulatoren.

Die erfindungsgemäße Vorrichtung zur Durchführung dieses Verfahrens weist neben entsprechenden elektrischen Anschlüssen und geeigneten Spannungsquellen für die Anlegung der notwendigen Formierungsspannung einen Füllkopf (1) auf, welcher zumindest je einen Zulauf (19) für den Gelbildner, die Säure und ein Spülmedium aufweist. Darüber hinaus weist der Füllkopf (1) eine Mischeinrichtung (20) zur statischen Mischung zumindest des Gelbildners mit der Säure auf. Des weiteren verfügt der Füllkopf über einen Füllfinger (21), der vorteilhafterweise an die zu befüllende Akkumulatorzelle angepasst ist und zur Flexibilität des Füllkopfes an diesem austauschbar angebracht ist. Darüber hinaus weist die Vorrichtung Durchflussmengenmesser für den Gelbildner und die eingesetzte Säure auf, mit deren Hilfe exakte, mittels einer Steuereinrichtung vorgebbare Mischungsverhältnisse erzeugt werden können.

Des weiteren verfügt die Vorrichtung am Füllkopf über eine Zuleitung für ein Spülmedium (2), mit dessen Hilfe über 3-Wege-Hähne (8.1 + 8.2) die in den Gelbildner führenden Leitungen (11.1+ 11.2) befindlichen Restmengen Gelbildner über eine Rückspülleitung (13) in den Vorratsbehälter für den Gelbildner (3) zurückgespült werden können. Vorteilhafterweise dient als Spülmedium Pressluft.

Die erfindungsgemäße Vorrichtung verfügt über Dosierpumpen für den Gelbildner (5.1 + 5.2) und die Säure (6.1 + 6.2). Vorteilhafterweise werden diese Dosierpumpen mittels Schrittmotoren (7.1 + 7.2) betrieben. Es ist jedoch auch jede andere Antriebsvorrichtung geeignet, durch welche sich eine feine und genaue Dosierung der zu mischenden Komponenten gewährleisten läßt.

Durch das kontinuierliche Mischen der Gelkomponenten im Füllkopf zum Zeitpunkt der Einfüllung des Gels in Form eines Sols in den Akkumulator und die mittels der Dosierpumpen fein einzustellenden Mischungsverhältnisse werden die aus der satzweisen Mischung des Elektrolytgels bekannten Qualitätsschwankungen überwunden. Durch die gleichzeitige Befüllung des Akkumulators mit dem Elektrolytgel bzw. Sol und Formierung der aktiven Massen in den Zellen werden die aus dem Stand der Technik bekannten Nachteile der Gelakkumulatoren überwunden.

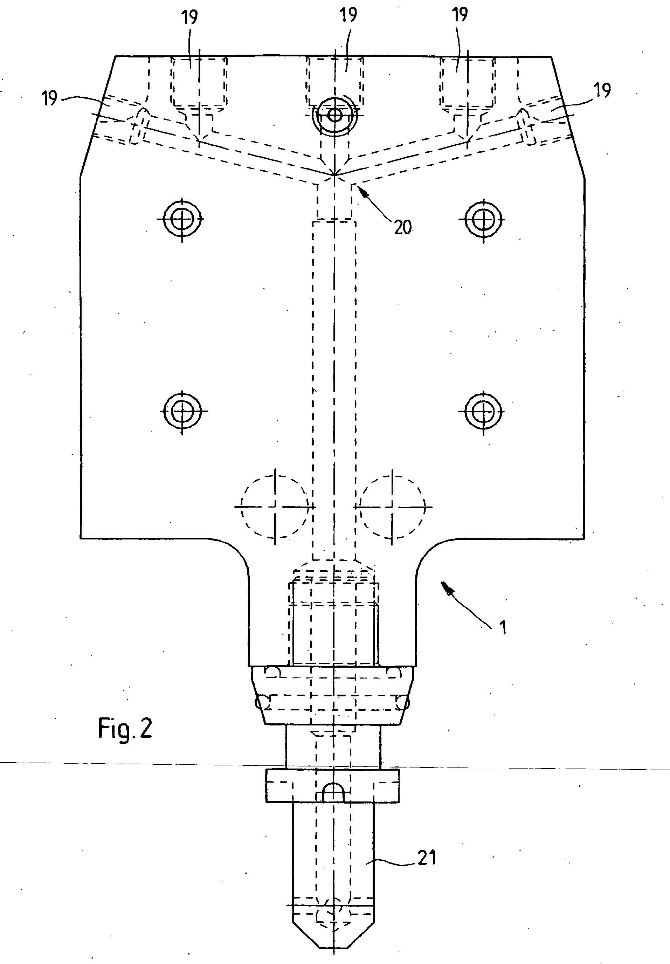

Vorteilhafterweise weist eine Vorrichtung zur Durchführung des erfindungsgemäßen Verfahrens einen wie beispielsweise in Fig. 2 dargestellten Füllkopf (1) auf. Der Füllkopf verfügt über zumindest jeweils einen Zulauf (19) für die Gelkomponenten und das Spülmedium. Darüber hinaus weist ein erfindungsgemäßer Füllkopf eine statische Mischvorrichtung (20) auf, in welcher die Gelkomponenten vor Einfüllung in den Akkumulator vermischt werden.

Zur Einfüllung des Elektrolytsols in den Akkumulator verfügt der erfindungsgemäße Füllkopf (1) über einen Füllfinger (21), welcher vorteilhafterweise an den zu befüllenden Akkumulator bzw. die Geometrie der Einfüllöffnung des Akkumulators angepasst ist. Vorteilhafterweise ist der Füllfinger (21) auswechselbar an den Füllkopf (1) angebracht, so dass ein Füllkopf (1) mittels unterschiedlicher Füllfinger (21) für unterschiedliche Akkumulatortypen eingesetzt werden kann.

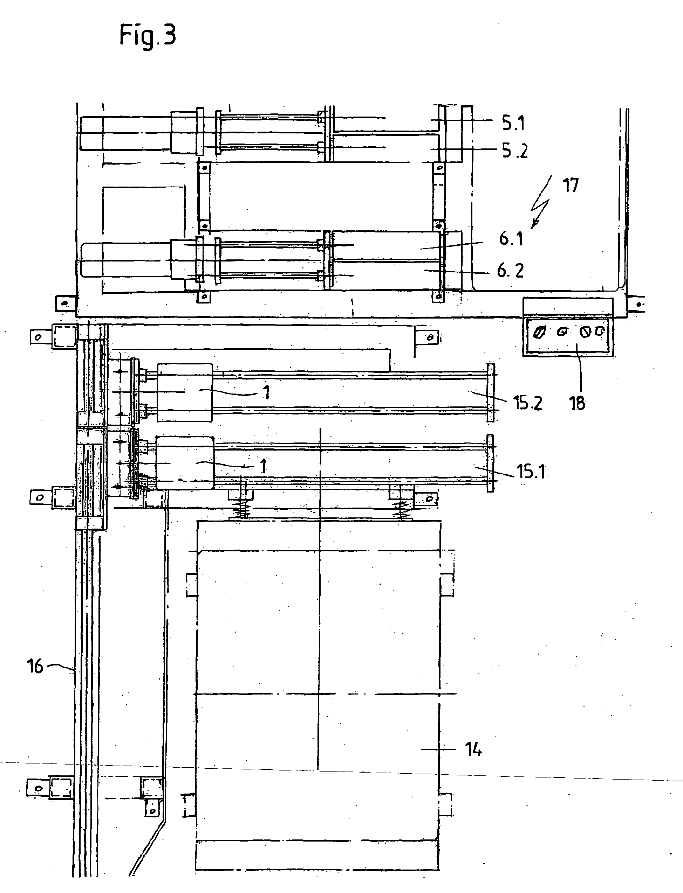

Fig. 3 zeigt eine erfindungsgemäße Vorrichtung zur Befüllung einer Mehrzahl von Akkumulatoren. Die erfindungsgemäße Vorrichtung weist eine Aufnahme (14) für die zu befüllenden Akkumulatoren, Positionierungsgeräte (15.1 + 15.2) für die erfindungsgemäßen Füllköpfe (1) sowie eine Dosiereinheit mit Dosierpumpen (5.1 + 5.2) für den Gelbildner und Dosierpumpen (6.1 + 6.2) für die Säure auf.

Die Positionierungsgeräte (15.1 + 15.2) für die Füllköpfe (1) sind an einer Führung (16) verfahrbar angebracht, so dass die Füllköpfe frei verfahrbar über der Aufnahme (14) für die zu befüllenden Akkumulatoren sind. Alternativ kann die Aufnahme (14) für die zu befüllenden Akkumulatoren in Form eines XY verfahrbaren Tisches ausgebildet sein, während die Füllköpfe (1) ortsfest angebracht sind. Eine weitere Alternative zur Positionierung der Füllköpfe (1) ist die Verwendung eines Sechs-Achsen-Knickarmrobotors oder anderer Handhabungsgeräte.

Zur Steuerung verfügt die erfindungsgemäße Vorrichtung über einen Steuerschrank (17) und ein Bedienpult (18).

### Bezugszeichenliste

- 1: Füllkopf
- 2: Leitung für Spülmedium
- 3: Vorratsbehälter Gelbildner
- 4: Vorratsbehälter Säure
- 5.1/5.2: Dosierpumpen Gelbildner
- 6.1/6.2: Dosierpumpen Säure
- 7.1/7.2: Schrittmotoren
- 8.1/8.2: 3-Wege-Hahn
- 9.1/9.2: Durchflussmesser Gelbildner
- 10.1/10.2: Durchflussmesser Säure
- 11.1/11.2: Leitung für Gelbildner
- 12.1/12.2: Leitung für Säure
- 13: Rückspülleitung Gelbildner
- 14: Aufnahme für zu befüllende Akkumulatoren
- 15.1/15.2: Positioniergerät mit Füllkopf
- 16: Laufschiene für Positioniergerät
- 17: Steuerschrank
- 18: Bedienpult
- 19: Zuläufe
- 20: Mischeinrichtung
- 21: Füllfinger

## Patentansprüche

1. Verfahren zur Herstellung eines Akkumulators mit einem festgelegten Elektrolyten, wobei der Elektrolyt in einer Akkumulatorzelle des Akkumulators in Form eines Gels festgelegt wird, wobei der Elektrolyt in fließfähiger Form, nämlich als Sol, in die Akkumulatorzelle eingebracht wird, wobei ein Gelbildner und eine Säure das Sol bildend erst im Moment der Einbringung in die Akkumulatorzelle gemischt werden, und die Festlegung des Elektrolyten und die Formation der aktiven Masse zeitgleich in der Akkumulatorzelle erfolgen, **dadurch gekennzeichnet, dass** mit Einbringung des Sols in die Akkumulatorzelle zeitgleich eine Spannung an die Akkumulatorzelle angelegt wird, die die aktive Masse in der Akkumulatorzelle formiert.

2. Verfahren nach Anspruch 1, **dadurch gekennzeichnet, dass** der Elektrolyt in der Akkumulatorzelle in Form eines Gels festgelegt wird.

3. Verfahren nach einem oder mehreren der vorhergehenden Ansprüche, **dadurch gekennzeichnet, dass** der Elektrolyt in Form eines Sol-Gemisches in die Akkumulatorzelle eingebracht wird.

4. Verfahren nach einem oder mehreren der vorhergehenden Ansprüche, **dadurch gekennzeichnet, dass** das Gel mindestens aus einem Sol und einer Säure gebildet wird.

5. Verfahren nach einem oder mehreren der vorhergehenden Ansprüche, **dadurch gekennzeichnet, dass** zumindest der Gelbildner und die Säure erst im Moment des Einbringens in die Akkumulatorzelle gemischt werden.

6. Verfahren nach einem oder mehreren der vorhergehenden Ansprüche, **dadurch gekennzeichnet, dass** der Akkumulator ein Blei-Gel-Akkumulator mit einem Siliciumdioxid / Schwefelsäure-Elektrolyten ist.

7. Verfahren nach Anspruch 6, **dadurch gekennzeichnet, dass** das Siliciumdioxid in Form einer kolloidalen wässrigen Lösung eingesetzt wird.

## Claims

1. Method for manufacturing a battery with an immobilized electrolyte, wherein the electrolyte is immobilized in the form of a gel in an accumulator cell of the accumulator, the electrolyte being introduced to the accumulator cell in a form capable of flowing, namely as a sol, the gelling agent and an acid forming the sol being mixed only at the time of introduction to the accumulator cell, and the immobilization of the electrolyte and the formation of the active mass taking place in the accumulator cell simultaneously, **characterized in that** simultaneously with the introduction of the sol to the accumulator cell, a voltage is applied to the accumulator cell which forms the active mass in the accumulator cell.

2. Method according to claim 1, **characterized in that** the electrolyte is immobilized in the form of a gel in the accumulator cell.

3. Method according to one or more of the preceding claims, **characterized in that** the electrolyte is introduced to the accumulator cell in the form of a sol-gel mixture.

4. Method according to one or more of the preceding claims, **characterized in that** the gel is formed at least from a sol and an acid.

5. Method according to one or more of the preceding claims, **characterized in that** at least the gelling agent and the acid are mixed only at the time of introduction to the accumulator cell.

6. Method according to one or more of the preceding claims, **characterized in that** the accumulator is a lead-gel accumulator with a silicon dioxide / sulfuric acid electrolyte.

7. Method according to claim 6, **characterized in that** the silicon dioxide is used in the form of a colloidal aqueous solution.

## Revendications

1. Procédé pour fabriquer un accumulateur avec un électrolyte fixé, l'électrolyte étant fixé dans une cellule d'accumulateur de l'accumulateur sous forme de gel, l'électrolyte étant introduit sous forme coulante, à savoir comme sol, dans la cellule d'accumulateur, un formateur de gel et un acide formant le sol n'étant mélangés qu'au moment de l'introduction dans la cellule d'accumulateur et la fixation de l'électrolyte et la formation de la masse active ayant lieu en même temps dans la cellule d'accumulateur, **caractérisé en ce qu'**une tension qui forme la masse active dans la cellule d'accumulateur est appliquée en même temps que l'introduction du sol dans la cellule d'accumulateur.

2. Procédé selon la revendication 1, **caractérisé en ce que** l'électrolyte est fixé dans la cellule d'accumulateur sous forme de gel.

3. Procédé selon l'une ou plusieurs des revendications précédentes, **caractérisé en ce que** l'électrolyte est introduit sous forme de mélange de sol dans la cellule d'accumulateur.

4. Procédé selon l'une ou plusieurs des revendications précédentes, **caractérisé en ce que** le gel est formé au moins par un sol et un acide.

5. Procédé selon l'une ou plusieurs des revendications précédentes, **caractérisé en ce qu'**au moins le formateur de gel et l'acide ne sont mélangés qu'au moment de l'introduction dans la cellule d'accumulateur.

6. Procédé selon l'une ou plusieurs des revendications précédentes, **caractérisé en ce que** l'accumulaeur est un accumulateur plomb/gel avec un électrolyte de dioxyde de silicium/acide sulfurique.

7. Procédé selon la revendiction 6, **caractérisé en ce que** le dioxyde de silicium est mis en oeuvre sous forme de solution aqueuse colloïdale.
